# DEMANDE DE BREVET EUROPEEN

(11) **EP 4 390 371 A1**
(43) Date de publication de la demande: **26.06.2024**
(21) Numéro de dépôt: 23218119.8
(22) Date de dépôt: 19.12.2023
(51) Int. Cl.: G01N 17/00

(54) **DISPOSITIF DE DÉTECTION ET DE CARACTÉRISATION D'UN DÉPÔT D ENCRASSEMENT SUR UNE PAROI, COMPRENANT UNE SONDE THERMIQUE ET AU MOINS UNE GARDE THERMIQUE L ENTOURANT**

(30) Priorité: 19.12.2022 FR 2213886
(71) Demandeur: Commissariat à l'énergie atomique et aux énergies alternatives, 75015 Paris (FR)
(72) Inventeur: MINVIELLE, Zoé, 38054 GRENOBLE CEDEX 09 (FR); DUCROS, Frédéric, 38054 GRENOBLE CEDEX 09 (FR); MEMPONTEIL, Alain, 38054 GRENOBLE CEDEX 09 (FR)
(74) Mandataire: Cabinet Nony

(57) **Abrégé**

L'invention concerne un dispositif (100) de détection et de caractérisation d'un encrassement d'une paroi (3) de support comprenant :
- une sonde thermique (1) configurée pour être fixée à la paroi et comprenant au moins un résistor configuré pour générer un flux thermique vers la paroi lorsque la sonde thermique est fixée à la paroi, et
- au moins une garde thermique (10) principale configurée pour être fixée à la paroi en contact avec la sonde thermique au moins sur une partie du périmètre de cette dernière, de préférence sur une partie supérieure à 50%, à 80%, à 90% ou égale à 100% du périmètre de cette dernière, l'au moins une garde thermique principale comprenant au moins une partie active et/ou passive configurée pour limiter la diffusion du flux thermique de la sonde dans la paroi.

## Description

### Domaine technique

La présente invention concerne le domaine de la détection de l'encrassement d'une paroi, et plus précisément un dispositif de détection et de caractérisation de l'encrassement d'une paroi.

L'invention concerne également un ensemble comprenant un tel dispositif et un procédé de détection et de caractérisation mettant en oeuvre un tel ensemble.

L'invention peut être mise en oeuvre pour de nombreuses applications industrielles dans lesquelles des parois subissent des phénomènes d'encrassement, notamment dans les domaines industriels de l'agroalimentaire, de la chimie, de l'énergie, et du froid. L'invention peut particulièrement être utilisée pour la surveillance d'échangeurs de chaleur et de conduites de transport de fluides.

Par « encrassement », on entend dans le cadre de l'invention tout phénomène générant un dépôt de matière indésirable sur une paroi, notamment sur une paroi soumise à un transfert thermique.

### Technique antérieure

Le phénomène d'encrassement a un impact défavorable sur des fonctionnalités, comme l'échange thermique, le passage de fluides ou la qualité sanitaire notamment des réservoirs de stockage ou des conduits de transport de fluides. Les échanges thermiques peuvent être perturbés par la présence d'une résistance thermique supplémentaire, la circulation de fluides peut être entravée par les dépôts d'encrassement, provoquant des pertes de charges, et l'environnement sanitaire peut être dégradé, notamment en raison du développement de bactéries.

Plusieurs procédés peuvent être mis en oeuvre pour identifier et caractériser un problème d'encrassement.

Des diagnostics globaux sur l'efficacité d'un transfert thermique ou sur les pertes de charges dans une conduite de fluide ou un équipement peuvent être implémentés à cette fin.

Des opérations de maintenance préventive destinées à empêcher l'accumulation de dépôts sur des parois sont également fréquemment utilisées pour éviter les problèmes d'encrassement, en particulier pour garantir l'hygiène de procédés agroalimentaires. Cependant, ces opérations préventives s'avèrent onéreuses à mettre en oeuvre, notamment en raison d'arrêts de production ou de la consommation de produits tels que des détergents.

La mise en oeuvre de capteurs locaux d'encrassement adaptés pour détecter un encrassement est également connue mais cela nécessite une adaptation spécifique pour chaque utilisation, ce qui est peu pratique et onéreux.

Des dispositifs de mesures locales à dissipation thermique, dits sondes thermiques, sont mis en oeuvre pour acquérir des informations sur la qualité d'échanges thermique locaux, et notamment pour détecter un encrassement dans des échangeurs de chaleur ou dans des tuyauteries. Ces dispositifs sont adaptés pour la mesure de températures locales et/ou de flux thermiques locaux et peuvent également fournir des informations sur les coefficients d'échange locaux. L'ensemble de ces mesures renseigne sur la performance et le fonctionnement de l'échangeur de chaleur.

De tels dispositifs sont décrits en particulier dans les demandes ou brevets suivants.

La demande WO 2009/153323 divulgue la quantification de l'encrassement par une mesure de la résistance thermique due à une couche d'encrassement.

La demande WO 2007/099240 décrit l'implémentation d'un dispositif de mesure d'encrassement dans un échangeur à plaques.

Les brevets EP 3339828 B1 et EP 3339836 B1 et la demande EP 3435067 A1 concernent le déploiement d'une ou de plusieurs bi-sondes thermiques pour déterminer la présence d'encrassement même lors de variations des résistances de convection en régime stationnaire ou non.

La demande EP 3771879 A1 a trait à un dispositif multi-écartement permettant de déterminer l'épaisseur des dépôts d'encrassement.

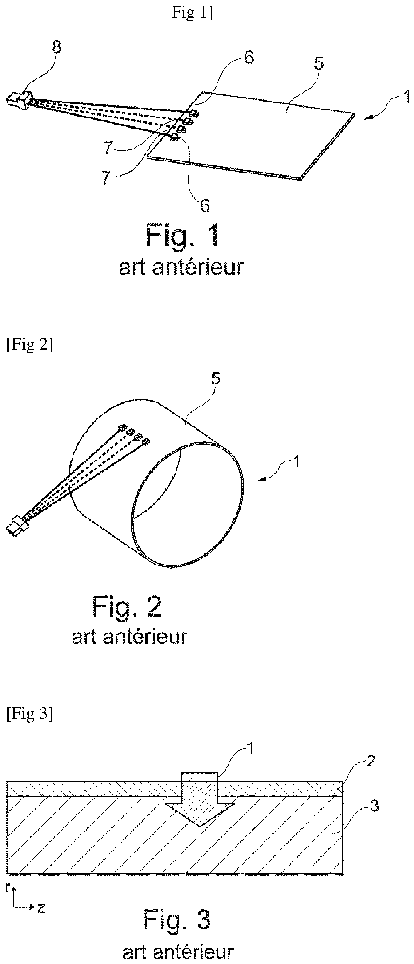

La figure 1 représente une sonde thermique 1 selon l'état de l'art.

La sonde thermique 1 comprend un dépôt de métal résistif, tel que le nickel ou le platine, dont la résistivité dépend de la température selon une loi connue. Ce dépôt de métal est mis en forme de façon à former un résistor ayant des caractéristiques d'impédance électrique et de dissipation thermique adéquates. Il a par exemple une forme de serpentin.

Le résistor est agencé entre deux films isolants électriques, par exemple réalisés en un polyimide tel que le Kapton^{®}, pour former le corps 5 de sonde. Avantageusement, le corps 5 est flexible.

La sonde thermique 1 est préférentiellement câblée avec quatre fils 6, 7 : deux fils 6 pour l'alimentation en courant du résistor et deux fils 7 pour la mesure de tension aux bornes du résistor. Les fils 7 permettent de réaliser une mesure plus précise de la tension aux bornes de la sonde en s'affranchissant de la résistance de câblage car le courant ne passe pas par ces fils 7. Toutefois, un câblage utilisant trois fils ou deux fils est également possible.

Dans le cas d'un câblage à deux fils, l'alimentation en courant et en tension du résistor sont appliquées par un unique fil et le retour du courant et de la tension passe également par un unique fil. La résistance générée par la circulation du courant peut perturber la mesure.

Dans le cas d'un câblage à trois fils, l'alimentation en courant et en tension sont appliquées au résistor par un unique fil et le retour du courant et de la tension se font par deux fils différents. La précision de la mesure est améliorée par rapport à un câblage à deux fils.

Un connecteur 8 réalise l'interface entre les fils 6, 7 et un dispositif de contrôle de la sonde.

La sonde est fixée, de préférence collée, à un support sur lequel le dépôt encrassant doit être détecté, de préférence sur la surface opposée à la surface sur laquelle l'encrassement est attendu.

Le support peut être plan ou courbe, notamment de forme tubulaire.

La sonde thermique 1 peut être utilisée dans une configuration plane, comme illustré à la figure 1, ou dans une configuration courbe, notamment annulaire, comme illustré à la figure 2.

Lorsque le résistor de la sonde est parcouru par un courant électrique, il dissipe une puissance thermique par effet Joule. Il est alors possible, par la mesure du courant I et de la différence de potentiel U aux bornes du résistor de la sonde, de connaître la puissance thermique dissipée P=UI et la résistance électrique R=U/I. La température de la sonde peut être déduite par la relation entre la résistivité et la température du matériau utilisé pour le résistor. Lorsque la sonde est parcourue par un courant, la dissipation thermique P induit une élévation de température ΔT=Tp-T0 où Tp est la température de sonde avec la puissance P dissipée et T0 la température de sonde à puissance dissipée nulle. T0 est mesurée soit directement par une mesure préliminaire de la température de la sonde avec une dissipation thermique suffisamment faible pour qu'elle n'élève pas sensiblement la température, soit en augmentant la puissance thermique par paliers Pi et en calculant pour chacun de ces paliers la température de sonde Ti à partir de la résistance mesurée. La température T0 à la puissance P=0 est déduite par régression linéaire des points Ti(Pi) pour P=0.

La résistance thermique de l'environnement de la sonde est Rth=ΔT/P ou dT/dP. Cette résistance thermique est la résultante des résistances thermiques série et parallèle de l'environnement de la sonde.

Parmi ces résistances thermiques environnementales, deux peuvent être évolutives : d'une part, la résistance thermique de convection du puits ou de la source de chaleur, typiquement un écoulement de fluide dont le coefficient d'échange peut évoluer par exemple avec le débit, et d'autre part une résistance thermique additionnelle susceptible de s'intercaler entre le support et le puits de chaleur, typiquement due à une couche d'encrassement.

L'interprétation de l'information acquise par les sondes thermiques repose sur un modèle de diffusion de la chaleur dans l'environnement de la sonde. Dans les modèles les plus simples, on fait l'hypothèse d'une diffusion unidirectionnelle, ou 1D, du flux thermique de la sonde.

En réalité, la diffusion du flux thermique de la sonde est multidirectionnelle, en particulier du fait de la présence de la paroi de l'échangeur de chaleur qui, pour assurer sa fonction, est un bon conducteur thermique. La présence d'une couche d'encrassement, thermiquement résistante, augmente l'étalement du flux thermique.

La figure 3 illustre schématiquement une sonde thermique 1 agencée sur la paroi 2 d'un conduit dans lequel circule un fluide 3. La sonde thermique 1 génère un flux thermique qui est transmis au fluide à travers la paroi. Ce flux thermique est schématisé par une flèche sur la figure 1. En l'absence de couche d'encrassement, le flux thermique transmis se diffuse peu au sein de la paroi.

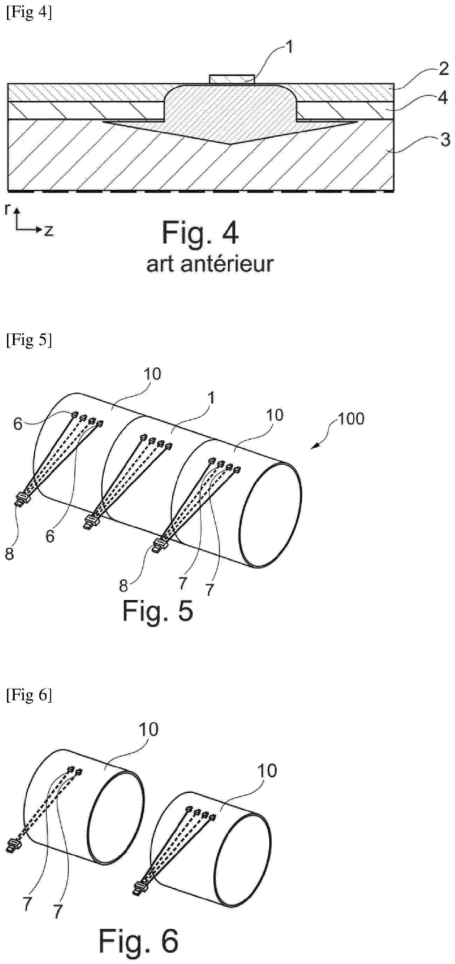

La figure 4 représente pour comparaison l'étalement du flux thermique lorsqu'une couche d'encrassement 4 est présente entre la paroi 2 et le fluide 3. Le flux thermique, représenté par la flèche sur la figure 2, se diffuse de manière significative dans la paroi.

Ainsi, une analyse plus précise de l'information recueillie par la sonde thermique nécessite la prise en compte de ce phénomène d'étalement thermique pour traduire l'augmentation de la résistance thermique due au développement d'une couche de dépôt d'encrassement.

Il existe donc un besoin pour un dispositif de détection et de caractérisation d'encrassement permettant une caractérisation plus précise de l'encrassement d'une paroi.

Un but de l'invention est de répondre au moins partiellement à ce besoin.

### Exposé de l'invention

Pour ce faire, l'invention concerne un dispositif de détection et de caractérisation d'un encrassement d'une paroi de support, comprenant :
- une sonde thermique, configurée pour être fixée à la paroi et comprenant au moins un résistor configuré pour générer un flux thermique vers la paroi lorsque la sonde thermique est fixée à la paroi, et
- au moins une garde thermique principale, configurée pour être fixée à la paroi en contact avec la sonde thermique au moins sur une partie du périmètre de cette dernière, de préférence sur une partie supérieure à 50%, à 80%, à 90% ou égale à 100% du périmètre de cette dernière, l'au moins une garde thermique principale comprenant au moins une partie active et/ou passive configurée pour limiter la diffusion du flux thermique de la sonde dans la paroi.

Le périmètre de la sonde thermique correspond aux bords latéraux de la sonde lorsqu'elle est fixée à la paroi.

L'invention consiste donc à mettre en oeuvre une ou plusieurs gardes thermiques principales entourant avec contact la sonde thermique dans sa configuration fixée à une paroi d'un support, afin de compenser ou à tout le moins de limiter, de manière active ou passive, la diffusion du flux thermique de la sonde dans la paroi.

Cela permet avantageusement de rendre le flux thermique entre la sonde thermique et le fluide essentiellement unidirectionnel, ce qui fiabilise l'interprétation des informations délivrées par la sonde. Cela peut également permettre d'obtenir des informations sur la nature des échanges thermiques dans l'environnement de la sonde.

Ainsi, le dispositif selon l'invention améliore les capacités de détection de l'apparition de l'encrassement et de caractérisation de son développement.

Selon un premier mode de réalisation avantageux, l'au moins une garde thermique principale comprend, en tant que partie active, un résistor configuré pour générer un flux thermique vers la paroi dans la configuration fixée de la au moins une garde thermique principale.

Selon un deuxième mode de réalisation avantageux, l'au moins une garde thermique principale comprend, en tant que partie passive, un matériau isolant thermiquement de conductivité thermique inférieure ou égale à 0,25 W.m⁻¹.K⁻¹, étant de préférence entièrement constituée par le matériau isolant thermiquement.

Un dispositif selon l'invention peut comporter une ou plusieurs des caractéristiques optionnelles suivantes :
- le dispositif est configuré pour être fixé à un support tubulaire et comporte deux gardes thermiques principales, la sonde thermique et les gardes thermiques principales étant de forme annulaire dans leur configuration fixée ;
- la sonde thermique et l'au moins une garde thermique principale sont fixées l'une à l'autre ;
- le dispositif comporte en outre au moins une garde thermique secondaire configurée pour être fixée à la paroi en contact avec le périmètre de l'au moins une garde thermique principale, l'au moins une garde thermique principale étant agencée entre la sonde thermique et l'au moins une garde thermique secondaire ;
- l'au moins une garde thermique secondaire comporte un résistor configuré pour générer un flux thermique vers la paroi lorsque l'au moins une garde thermique secondaire est fixée à la paroi.
un dispositif de contrôle.

L'invention concerne également un ensemble de détection et de caractérisation d'un encrassement d'une paroi de support, comprenant :
- un dispositif selon l'invention,
- un dispositif de contrôle actif relié électriquement à la sonde thermique et à la au moins une partie active de l'au moins une garde thermique principale, et le cas échéant secondaire, le dispositif de contrôle actif étant configuré pour alimenter en courant et pour mesurer, et le cas échéant réguler, les tensions et/ou les courants aux bornes de la sonde thermique et le cas échéant de la partie active de l'au moins une garde thermique.

L'invention concerne enfin un procédé de détection et de caractérisation d'un encrassement d'une paroi de support au moyen d'un ensemble selon l'invention, comprenant les étapes consistant à :
(a) fixer le dispositif de détection et de caractérisation sur la paroi, de préférence par collage ;
(b) alimenter en courant le au moins un résister de la sonde thermique et la partie active de l'au moins une garde thermique principale;
(c) mesurer le courant et la tension aux bornes de la sonde thermique.

Le procédé selon l'invention peut comporter l'une ou plusieurs des caractéristiques optionnelles suivantes :
- l'alimentation en courant de l'au moins une garde thermique principale est adaptée pour que la température de la garde thermique principale soit sensiblement égale à la température de la sonde thermique ;
- le procédé comporte après l'étape c) une étape d) consistant à mesurer le courant et la tension aux bornes de l'au moins une garde thermique principale ;
- la mesure du courant et de la tension de l'au moins une garde thermique principale est réalisée aux bornes d'une section de la garde thermique principale, adjacente à la sonde thermique, ladite section comprenant moins de 50%, moins de 30% ou moins de 10% de la surface totale de la garde thermique.

### Brève description des dessins

[Fig 1] La figure 1 est une vue en perspective d'une sonde thermique selon l'état de l'art.
[Fig 2] La figure 2 est une vue en perspective d'une deuxième sonde thermique selon l'état de l'art.
[Fig 3] La figure 3 est un schéma illustrant un transfert thermique entre une sonde thermique selon l'état de l'art et un fluide à travers une paroi.
[Fig 4] La figure 4 est un schéma illustrant un transfert thermique entre une sonde thermique selon l'état de l'art et un fluide à travers une paroi et une couche d'encrassement.
[Fig 5] La figure 5 est une vue en perspective d'un dispositif de détection et de caractérisation d'un encrassement selon l'invention.
[Fig 6] La figure 6 représente une partie du dispositif de la figure 5.
[Fig 7] La figure 7 représente un ensemble comprenant le dispositif de la figure 5.
[Fig 8] La figure 8 représente schématiquement un transfert thermique entre une sonde thermique selon l'état de l'art et un fluide à travers une paroi.
[Fig 9] La figure 9 représente schématiquement un transfert thermique entre une sonde thermique selon l'état de l'art et un fluide à travers une paroi et une couche d'encrassement.
[Fig 10] La figure 10 représente schématiquement un transfert thermique entre un dispositif de détection et de caractérisation d'un encrassement selon l'invention et un fluide à travers une paroi.
[Fig 11] La figure 11 représente schématiquement un transfert thermique entre un dispositif de détection et de caractérisation d'un encrassement selon l'invention et un fluide à travers une paroi et une couche d'encrassement.

### Description détaillée

Dans l'ensemble de la présente demande, les termes « axial » et « radial » sont à comprendre par référence à un support tubulaire s'étendant selon un axe central longitudinal.

Les figures 1 à 4 ont déjà été décrites en préambule et ne seront pas commentées ci-après. Les mêmes références numériques ont été conservées dans la suite pour désigner des éléments identiques ou similaires.

Un dispositif 100 de détection et de caractérisation d'un encrassement selon l'invention, dit sonde à garde thermique, est représenté à la figure 5.

Le dispositif 100 comporte une sonde thermique 1, pouvant être une sonde thermique telle que décrite en référence aux figures 1 et 2.

Dans le mode de réalisation illustré, la sonde thermique 1 est de forme annulaire et peut être fixée sur la circonférence d'un tube, de préférence par collage.

Deux gardes thermiques 10, également chacune de forme annulaire, sont disposées de part et d'autre de la sonde thermique 1, de préférence en contact avec les bords latéraux de la sonde thermique. Ces bords latéraux constituent le périmètre de la sonde thermique.

Avantageusement, les gardes thermiques sont des composants chauffants et comportent un résistor comprenant un métal résistif pouvant être identique ou différent de celui de la sonde thermique 1. Comme pour la sonde thermique 1, le résistor des gardes thermiques est disposé entre deux films isolants électriques. Les gardes thermiques 10 peuvent chacune comporter deux fils 6 pour l'alimentation en courant du résistor et deux fils 7 pour la mesure de tension aux bornes du résistor. Toutefois, l'une ou l'autre des gardes thermiques 10 peut également comporter un total de deux ou trois fils, comme illustré à la figure 6.

Pour chaque garde thermique 10, un connecteur 8 assure l'interface entre les fils 6, 7 et un dispositif de contrôle actif 20.

Dans le mode de réalisation illustré, les gardes thermiques 10 sont actives et permettent de dissiper une puissance thermique par effet Joule et d'effectuer une mesure de leur température. Selon un mode de réalisation alternatif, les gardes thermiques sont passives et ne comportent pas de résistor. Elles sont alors constituées par un matériau isolant ayant une très faible conductivité thermique. Il est également envisageable qu'une garde thermique soit active et l'autre passive, ou encore que chaque garde thermique comporte une partie active et une partie passive, la partie active étant disposée entre la partie passive et la sonde.

La surface des gardes thermiques en contact avec le support peut être identique à celle de la sonde thermique 1 ou différente, en particulier plus grande, par exemple supérieure ou égale à deux fois celle de la sonde thermique.

Les gardes thermiques 10 peuvent être fixées à la sonde thermique 1 de sorte à former un ensemble solidaire. Alternativement, la sonde thermique 1 et les gardes thermiques 10 peuvent être fixées sur un support de manière indépendante.

De préférence, les gardes thermiques 10 et la sonde thermique 1 sont fixées au support par collage, notamment au moyen d'une colle ou d'un film adhésif disposé entre le support et une face intérieure des gardes et de la sonde.

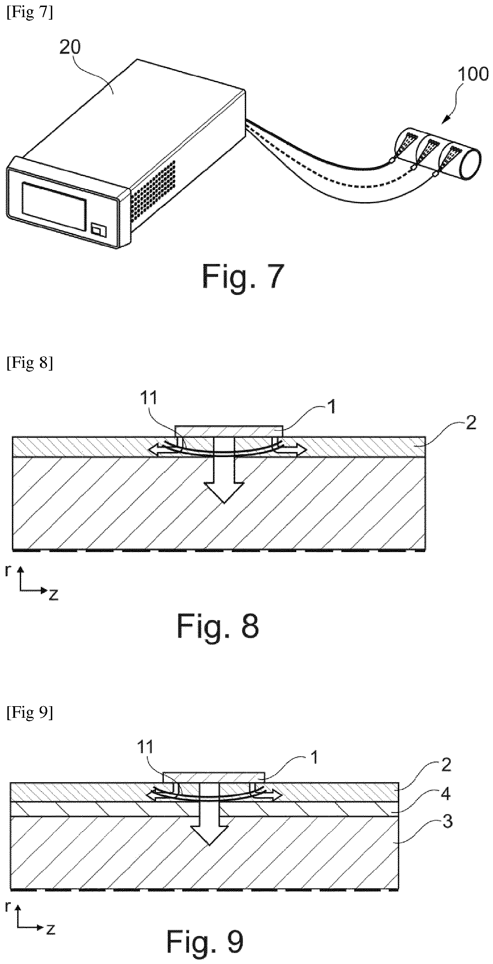

Comme représenté à la figure 7, chacune des gardes thermiques 10 et de la sonde thermique 1 est connectée au dispositif de contrôle actif 20. Le dispositif de contrôle actif 20 alimente le dispositif 100 de détection et de caractérisation en courant électrique continu et permet la mesure de la tension aux bornes de la sonde et des gardes. Le dispositif de contrôle actif 20 peut comporter une, deux, trois ou plus de sources de courant, chacune permettant ou non la mesure de l'intensité et la régulation de courant ou de puissance des composants du dispositif 100 de détection et de caractérisation. Il peut également comporter un, deux, trois ou plus de moyens de mesure de tension.

Le dispositif de contrôle actif 20 doit permettre de réaliser une séquence de mesures desquelles peut être déduit l'encrassement de la paroi du support à travers la quantification de la valeur ΔT/P, soit la variation de température de la sonde thermique divisée par la puissance thermique dissipée. Cela peut être réalisé avec différents niveaux de précision en fonction de la configuration du dispositif de contrôle actif.

Ainsi, la configuration du dispositif 20 est avantageusement choisie en fonction du nombre d'éléments chauffants, des contraintes de précision de la mesure et du coût des moyens électroniques employés.

Pour une qualité de mesure optimale, le dispositif de contrôle 20 comporte autant de générateurs de courant qu'il y a de composants chauffants dans le dispositif 100 de détection et de caractérisation et il comporte les moyens nécessaires pour la mesure des courants et des tensions de chacun des composants chauffants.

Dans le cas du mode de réalisation illustré comprenant trois composants chauffants, selon une première configuration produisant les mesures les plus précises pour le coût le plus élevé, le dispositif 20 comporte trois générateurs de courant alimentant chacun de la sonde et des deux gardes thermiques. Il comporte également les moyens nécessaires pour la mesure des courants et des tensions de chacun des trois composants. Le courant de la sonde est contrôlé de sorte à reproduire une consigne de puissance et les courants des gardes thermiques sont déterminés de sorte que les températures des gardes thermiques sont égales à la température de la sonde. Ainsi, le courant appliqué à la sonde est déterminé en fonction de la puissance que l'on souhaite appliquer à la sonde.

Selon une deuxième configuration produisant des mesures moins précises pour un coût moindre en comparaison à la première configuration, le dispositif 20 comporte trois générateurs de courant alimentant chacun de la sonde et des deux gardes thermiques. Il comporte également les moyens nécessaires à la mesure des courants et des tensions de chacun des trois composants. Le courant de la sonde est contrôlé de sorte à reproduire une consigne de courant et les courants des gardes thermiques sont déterminés de sorte que les températures des gardes thermiques sont égales à la température de la sonde. Ainsi, on choisit directement le courant appliqué à la sonde.

Selon une troisième configuration produisant des mesures moins précises pour un coût moindre en comparaison à la deuxième configuration, le dispositif 20 comporte deux générateurs de courant, l'un alimentant la sonde et l'autre alimentant en série les deux gardes thermiques. Il comporte également les moyens nécessaires à la mesure des deux courants et de deux ou trois tensions, selon que la tension des gardes thermiques est mesurée aux bornes de la mise en série des deux gardes thermiques ou de chacune des gardes thermiques. Le courant de la sonde est contrôlé de sorte à reproduire une consigne de courant et le courant des gardes thermiques est déterminé de sorte que les températures des gardes thermiques sont égales à celle de la sonde.

Selon une quatrième configuration produisant des mesures moins précises pour un coût moindre en comparaison à la troisième configuration, le dispositif 20 comporte un unique générateur de courant alimentant en série la sonde et les deux gardes thermiques. Il comporte également les moyens nécessaires à la mesure du courant et celle de la tension de la sonde. Le courant de la sonde est contrôlé de sorte à reproduire une consigne de courant. Le comportement des gardes thermiques est dépendant du courant appliqué à la mise en série des trois composants.

De préférence, la résistance surfacique des gardes thermiques et celle de la sonde sont identiques afin que les flux thermiques soient identiques pour une même valeur de courant appliquée aux gardes et à la sonde. Toutefois, des résistances surfaciques légèrement différentes peuvent être avantageuses en fonction des conditions de mise en oeuvre de l'invention, notamment pour compenser un comportement physique particulier ou un biais expérimental. Dans ce cas, un étalonnage peut avantageusement être réalisé pour déterminer les résistances surfaciques optimales.

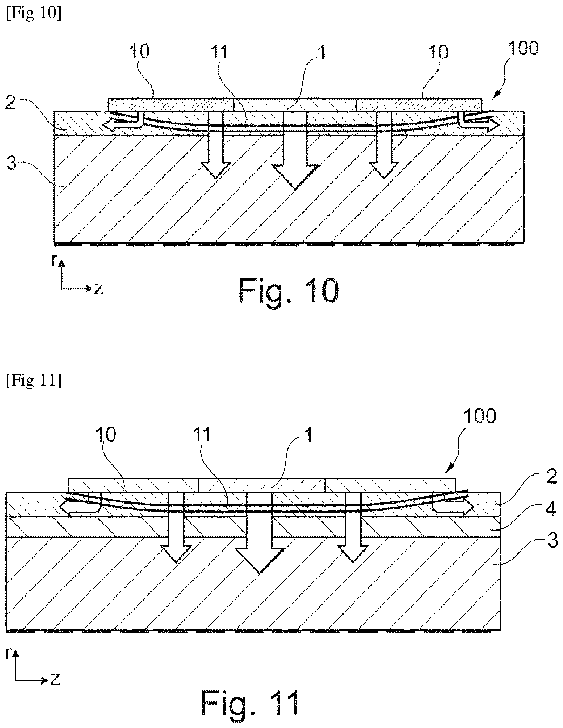

Les figures 8 et 9 sont des vues en coupe illustrant une sonde thermique 1 agencée sur une paroi 2 d'un support tubulaire dans lequel circule un fluide 3. Les figures 10 et 11 sont des vues en coupe illustrant un dispositif 100 de détection et de caractérisation selon l'invention agencé sur la paroi 2. Dans les figures 8 à 11, les flèches représentent les flux thermiques à partir des éléments chauffants, c'est-à-dire la sonde thermique 1 et les gardes thermiques 10. Une couche d'encrassement 4 est présente sur les figures 9 et 11.

Sur chacune des figures 8 à 11, une ligne isotherme 11 représente une ligne le long de laquelle la température est constante.

Comme visible sur les figures 8 et 9, en l'absence de garde thermique, les isothermes 11 ne sont pas parallèles à la sonde thermique 1 sur toute la largeur de cette dernière, mesurée selon la direction axiale. Des transferts thermiques ont lieu dans l'épaisseur de la paroi du tube 2 à partir des bords de la sonde thermique : il existe donc une composante axiale des transferts thermiques, c'est-à-dire une composante parallèle à la direction axiale Z. Ces transferts thermiques latéraux sont plus importants en présence d'une couche d'encrassement 4.

Les isothermes sont localement perpendiculaires au flux de transfert thermique. Lorsque les isothermes sont parallèles à la sonde thermique 1, le flux thermique est radial et se dirige directement vers le fluide 3. Lorsque les isothermes ont une composante radiale non nulle, le flux thermique a une composante axiale dans la paroi du tube 2, comme c'est le cas aux bords de la sonde thermique 1.

La composante axiale du flux thermique impacte la qualité des mesures de la sonde thermique 1. Comme cette composante axiale dépend de la résistance thermique entre la sonde et le fluide et donc de la présence ou de l'absence de la couche d'encrassement 4, la résistance thermique du point de vue de la sonde thermique est complexe à déterminer. En particulier, le chemin thermique et sa variation temporelle ne sont pas connus.

Pour pallier le transfert thermique dans la paroi 2 du support tubulaire et maintenir les isothermes parallèles à la sonde thermique sur toute la largeur de la sonde entre la sonde et le fluide, des gardes thermiques 10 sont disposées de part et d'autre de la sonde thermique 1 pour former le dispositif 100, comme illustré aux figures 10 et 11.

Les gardes thermiques 10 sont configurées pour dissiper une puissance thermique par effet Joule et ainsi produire un flux thermique. Les gardes thermiques 10 dissipent une puissance thermique telle que la composante axiale du flux thermique est nulle sur toute la largeur de la sonde thermique 1.

Ainsi, les gardes thermiques 10 ont pour effet de rendre le flux thermique entre la sonde 1 et le fluide 3 uniquement radial, en déportant la déformation radiale des isothermes 11 en amont et en aval de la sonde 1 jusqu'aux bords des gardes thermiques 10, comme visible sur les figures 10 et 11.

Le flux thermique entre la sonde thermique et le fluide étant uniquement radial, la résistance thermique mesurée entre la sonde et le fluide est alors facilement interprétable. Cela permet de fiabiliser l'interprétation des informations délivrées par la sonde.

De préférence, la puissance thermique dissipée dans les gardes thermiques 10 est pilotée. Pour maintenir les isothermes parallèles à la sonde thermique 1 entre cette dernière et le fluide, la surface extérieure du support tubulaire doit constituer une ligne isotherme. Par conséquent, la sonde 1 et les gardes thermiques 10 doivent être maintenues sensiblement à la même température. Toutefois, d'éventuelles différences de propriétés dues à la structure de la sonde et des gardes ou à leur fixation sur le support tubulaire peuvent jouer un rôle important. Si ces paramètres ne sont pas négligeables, leur caractérisation thermique doit être effectuée pour réaliser une correction adéquate, et la température des gardes thermiques 10 pour maintenir les isothermes parallèles sous la sonde peut éventuellement être différente de la température de la sonde.

De préférence, la sonde thermique 1 et les gardes thermiques 10 ont une forme annulaire et recouvrent la totalité du périmètre extérieur du support tubulaire. Si le dispositif 100 ne recouvre pas tout le périmètre du support, le flux thermique entre la sonde et le fluide peut ne pas être purement radial même en présence des gardes thermiques.

Comme visible sur les figures 10 et 11, le flux thermique entre les gardes thermiques 10 et le fluide 3 possède une composante axiale au niveau des bords des gardes thermiques opposés aux bords adjacents à la sonde thermique 1. De ce fait, la résistance thermique du point de vue des gardes est plus faible que pour la sonde et, pour une densité donnée de flux thermique sous le résistor des gardes thermiques, la température des gardes thermiques a tendance à être inférieure vers leur bord latéral extérieur par rapport à leur température vers leur bord latéral qui est adjacent à la sonde.

La température calculée avec la résistance totale du résistor des gardes thermiques est une température moyenne sur l'ensemble de la surface des gardes thermiques. La température d'une garde thermique uniquement dans sa partie adjacente à la sonde thermique n'est donc pas connue avec précision.

Ainsi, on mesure de préférence la résistance thermique du résistor des gardes thermiques uniquement dans une section du résistor adjacente à la sonde thermique. Cela permet de connaître la température des gardes à proximité immédiate de la sonde thermique et, à l'aide de cette information, de mieux contrôler la puissance thermique dissipée par les gardes thermiques de sorte à maintenir les isothermes sous la sonde parallèles à cette dernière. Pour réaliser la mesure de résistance à proximité de la sonde thermique, on mesure la tension aux bornes d'un tronçon du résistor de la garde thermique sur une partie seulement de la largeur de la garde thermique en partant du bord de la garde adjacent à la sonde. De préférence, cette partie représente moins de 50%, moins de 30% ou moins de 10% de la largeur totale de la garde thermique.

Pour réaliser cette mesure de résistance, la garde thermique comporte de préférence au moins trois fils, un fil étant utilisé pour l'alimentation en courant et en tension, un fil étant utilisé pour la mesure de courant et un fil pour la mesure de tension.

Bien que l'invention soit décrite dans le cadre de la mesure de l'encrassement d'un support de forme tubulaire au moyen d'un dispositif de détection et de caractérisation de forme annulaire, le même principe de garde thermique est applicable pour des supports de forme plane ou courbe avec des sondes thermiques de forme plane, notamment rectangulaire ou circulaire, ou courbe. Quelle que soit la forme de la sonde thermique, la ou les gardes thermiques sont configurées pour être disposées autour de la sonde thermique sur le support à caractériser. Le dispositif de détection et de caractérisation selon l'invention peut comporter une, deux, trois, quatre ou plus de gardes thermiques disposées autour du bord périphérique de la sonde thermique.

Le dispositif selon l'invention peut également comporter des gardes thermiques secondaires configurées pour être disposées autour des bords périphériques des gardes thermiques principales entourant la sonde thermique, c'est-à-dire en contact avec le périmètre des gardes thermiques principales. D'autres gardes thermiques peuvent encore être prévues pour être disposées autour des bords périphériques de gardes thermiques secondaires pour former des gardes thermiques supplémentaires. L'ajout de gardes thermiques secondaires permet avantageusement d'améliorer la qualité de la compensation du flux thermique de la sonde thermique.

L'invention telle que décrite comprend la mise en oeuvre de gardes thermiques actives, contrôlées par le dispositif de contrôle pour améliorer la compensation de flux thermique. Il est également possible de mettre en oeuvre des gardes thermiques passives. Les gardes passives sont configurées pour être disposées tout autour de la sonde thermique, comme les gardes thermiques actives, et comprennent un matériau isolant thermiquement ayant une très faible conductivité thermique pour limiter la diffusion du flux thermique selon la direction axiale, par exemple du polytétrafluoroéthylène (PTFE). De préférence cette conductivité thermique est inférieure à 0,25 W.m⁻¹.K⁻¹, à 0,1 W.m⁻¹.K⁻¹, à 0,05 W.m⁻¹.K⁻¹ ou à 0,01 W.m⁻¹.K⁻¹.

D'autres variantes et améliorations peuvent être envisagées sans pour autant sortir du cadre de l'invention.

## Revendications

1. Dispositif (100) de détection et de caractérisation d'un encrassement d'une paroi (3) de support, comprenant :
- une sonde thermique (1) configurée pour être fixée à la paroi et comprenant au moins un résistor configuré pour générer un flux thermique vers la paroi lorsque la sonde thermique est fixée à la paroi, et
- au moins une garde thermique (10) principale configurée pour être fixée à la paroi en contact avec la sonde thermique au moins sur une partie du périmètre de cette dernière, de préférence sur une partie supérieure ou égale à 50%, à 80%, à 90% ou égale à 100% du périmètre de cette dernière, l'au moins une garde thermique principale comprenant au moins une partie active et/ou passive configurée pour limiter la diffusion du flux thermique de la sonde dans la paroi.

2. Dispositif selon la revendication 1, l'au moins une garde thermique principale comprenant, en tant que partie active, un résistor configuré pour générer un flux thermique vers la paroi dans la configuration fixée de l'au moins une garde thermique principale.

3. Dispositif selon la revendication 1, l'au moins une garde thermique principale comprenant, en tant que partie passive, un matériau isolant thermiquement de conductivité thermique inférieure ou égale à 0,25 W.m⁻¹.K⁻¹.

4. Dispositif selon l'une des revendications précédentes, configuré pour être fixé à un support tubulaire et comprenant deux gardes thermiques principales, la sonde thermique et les gardes thermiques principales étant de forme annulaire dans leur configuration fixée.

5. Dispositif selon l'une des revendications précédentes, la sonde thermique et l'au moins une garde thermique principale étant fixées l'une à l'autre.

6. Dispositif selon l'une des revendications précédentes, comprenant en outre au moins une garde thermique secondaire configurée pour être fixée à la paroi en contact avec le périmètre de l'au moins une garde thermique principale, l'au moins une garde thermique principale étant agencée entre la sonde thermique et l'au moins une garde thermique secondaire.

7. Ensemble de détection et de caractérisation d'un encrassement d'une paroi de support, comprenant :
- un dispositif selon l'une des revendications précédentes,
- un dispositif de contrôle actif (20) relié électriquement à la sonde thermique et à la au moins une partie active de l'au moins une garde thermique principale, et le cas échéant secondaire, le dispositif de contrôle actif étant configuré pour alimenter en courant et pour mesurer, et le cas échéant réguler, les tensions et/ou les courants aux bornes de la sonde thermique et le cas échéant de la partie active de l'au moins une garde thermique.

8. Procédé de détection et de caractérisation d'un encrassement d'une paroi de support au moyen d'un ensemble selon la revendication 7, comprenant les étapes consistant à :
(a) fixer le dispositif de détection et de caractérisation sur la paroi, de préférence par collage ;
(b) alimenter en courant le au moins un résistor de la sonde thermique et la partie active de l'au moins une garde thermique principale;
(c) mesurer le courant et la tension aux bornes de la sonde thermique.

9. Procédé selon la revendication précédente, selon lequel l'alimentation en courant de l'au moins une garde thermique principale est adaptée pour que la température de la garde thermique principale soit sensiblement égale à la température de la sonde thermique.

10. Procédé selon l'une des revendications 8 ou 9, comprenant après l'étape c), une étape d) consistant à mesurer le courant et la tension aux bornes de l'au moins une garde thermique principale.

11. Procédé selon l'une des revendications 8 à 10, selon lequel la mesure du courant et de la tension de l'au moins une garde thermique principale est réalisée aux bornes d'une section de la garde thermique principale, adjacente à la sonde thermique, ladite section comprenant moins de 50%, moins de 30% ou moins de 10% de la surface totale de la garde thermique
